# EUROPEAN PATENT APPLICATION

(11) **EP 4 819 165 A1**
(43) Date of publication of application: **07.10.2026**
(21) Application number: 24895600.5
(22) Date of filing: 25.06.2024
(51) Int. Cl.: G21D 3/06, G21C 17/00

(54) **FAULT PROCESSING METHOD AND APPARATUS FOR NUCLEAR POWER PLANT, COMPUTER DEVICE, AND STORAGE MEDIUM**

(30) Priority: 29.11.2023 CN 202311615075
(71) Applicant: China Nuclear Power Technology Research Institute Co., Ltd., Shenzhen, Guangdong 518031 (CN); CGN Power Co., Ltd., Shenzen, Guangdong 518028 (CN); China Nuclear Power Engineering Co., Ltd., Shenzhen, Guangdong 518124 (CN)
(72) Inventor: HU, Yisong, Shenzhen, Guangdong 518031 (CN); MAO, Yulong, Shenzhen, Guangdong 518031 (CN); MENG, Shuqi, Shenzhen, Guangdong 518031 (CN); LU, Xianghui, Shenzhen, Guangdong 518031 (CN); HU, Yousen, Shenzhen, Guangdong 518031 (CN); CAO, Jianhua, Shenzhen, Guangdong 518031 (CN); WANG, Weiru, Shenzhen, Guangdong 518031 (CN); FENG, Yingjie, Shenzhen, Guangdong 518031 (CN); LI, Kejia, Shenzhen, Guangdong 518031 (CN); CHEN, Tianming, Shenzhen, Guangdong 518031 (CN); ZHANG, Wei, Shenzhen, Guangdong 518031 (CN)
(74) Representative: Greaves Brewster LLP
(86) International application number: PCT/CN2024/101327
(87) International publication number: WO 2025/112497

(57) **Abstract**

A fault processing method for a nuclear power plant is provided, including: obtaining detection signal sets corresponding to electrical zones in a pressurized water reactor (S101); determining a target failure mode and a temperature-related value of the pressurized water reactor based on the detection signal sets (S102); and performing fault processing on the pressurized water reactor according to the target failure mode and the temperature-related value (S103). With the fault processing method for a nuclear power plant, the safety of operation of the nuclear power plant can be improved.

## Description

This application claims priority to Chinese Patent Application No. 202311615075.6, filed on November 29, 2023 and entitled "FAULT PROCESSING METHOD AND APPARATUS FOR NUCLEAR POWER PLANT, COMPUTER DEVICE, AND STORAGE MEDIUM", the entire content of which is incorporated herein by reference.

### TECHNICAL FIELD

The present application relates to the technical field of nuclear power technology, and in particular, to a fault processing method and apparatus for a nuclear power plant, a computer device, and a storage medium.

### BACKGROUND

With the development of nuclear power technology, to ensure safe operation of a pressurized water reactor in a nuclear power plant, the operational status of a neutron detector in the pressurized water reactor needs to be monitored. When the neutron detector has failed, the faulty neutron detector is repaired or replaced.

However, since the neutron detector is disposed in the pressurized water reactor, conventional fault processing methods require waiting until the end of the operating cycle of the pressurized water reactor to perform repair or replacement of the neutron detector when the reactor vessel head is opened during refueling, thereby reducing the safety of nuclear power operation.

### SUMMARY

Accordingly, it is necessary to provide, in response to the above technical problem, a fault processing method and apparatus for a nuclear power plant, a computer device, and a computer-readable storage medium that can improve the safety of nuclear power operation.

In a first aspect, the present application provides a fault processing method for a nuclear power plant. The method includes:
obtaining detection signal sets corresponding to electrical zones in a pressurized water reactor, respectively, where the detection signal sets corresponding to the electrical zones each include a detection signal detected by a neutron detector disposed in a respective one of the electrical zones;
determining a target failure mode and a temperature-related value of the pressurized water reactor based on the detection signal sets, where the temperature-related value includes a departure from nucleate boiling ratio (DNBR) and/or a linear power density (LPD); and
performing fault processing on the pressurized water reactor according to the target failure mode and the temperature-related value.

In one of the embodiments, determining the target failure mode of the pressurized water reactor based on the detection signal sets includes: constructing a core power distribution corresponding to the pressurized water reactor based on the detection signal sets; and determining the target failure mode of the pressurized water reactor based on respective core powers in the core power distribution.

In one of the embodiments, determining the target failure mode of the pressurized water reactor based on the respective core powers in the core power distribution includes: determining a fault status of the neutron detector disposed in a respective one of the electrical zones in the pressurized water reactor based on each of the core powers in the core power distribution; and determining the target failure mode of the pressurized water reactor based on fault statuses of neutron detectors in the respective electrical zones in the pressurized water reactor.

In one of the embodiments, before performing the fault processing on the pressurized water reactor according to the target failure mode and the temperature-related value, the method further includes: determining a number of faulty probes based on the fault statuses of the neutron detectors in the respective electrical zones in the pressurized water reactor; and performing a reactor trip on the pressurized water reactor when the number of faulty probes is greater than a quantity threshold.

In one of the embodiments, performing the fault processing on the pressurized water reactor according to the target failure mode and the temperature-related value includes: determining a reactor trip protection threshold of the pressurized water reactor according to the target failure mode, where the reactor trip protection threshold includes a DNBR threshold and/or an LPD threshold; and performing the fault processing on the pressurized water reactor based on the reactor trip protection threshold and the temperature-related value.

In one of the embodiments, performing the fault processing on the pressurized water reactor based on the reactor trip protection threshold and the current measured value of the pressurized water reactor includes: performing a reactor trip on the pressurized water reactor when a magnitude relationship between the reactor trip protection threshold and the temperature-related value meets a reactor trip condition.

In one of the embodiments, the method further includes: partitioning the neutron detectors in the pressurized water reactor according to an arrangement of the neutron detectors in the pressurized water reactor to obtain the electrical zones, where the electrical zones are distributed in an interlaced manner, and each of the electrical zones includes at least one neutron detector.

In a second aspect, the present application further provides a fault processing apparatus for a nuclear power plant. The apparatus includes:
a signal obtaining module, configured to obtain detection signal sets corresponding to electrical zones in a pressurized water reactor, respectively, where the detection signal sets corresponding to the electrical zones each include a detection signal detected by a neutron detector disposed in a respective one of the electrical zones;
a determination module, configured to determine a target failure mode and a temperature-related value of the pressurized water reactor based on the detection signal sets, where the temperature-related value includes a departure from nucleate boiling ratio (DNBR) and/or a linear power density (LPD); and
a fault processing module, configured to perform fault processing on the pressurized water reactor according to the target failure mode and the temperature-related value.

In a third aspect, the present application further provides a computer device. The computer device includes a memory and a processor, the memory stores a computer program, and the processor, when executing the computer program, implements the following steps:
obtaining detection signal sets corresponding to electrical zones in a pressurized water reactor, respectively, where the detection signal sets corresponding to the electrical zones each include a detection signal detected by a neutron detector disposed in a respective one of the electrical zones;
determining a target failure mode and a temperature-related value of the pressurized water reactor based on the detection signal sets, where the temperature-related value includes a departure from nucleate boiling ratio (DNBR) and/or a linear power density (LPD); and
performing fault processing on the pressurized water reactor according to the target failure mode and the temperature-related value.

In a fourth aspect, the present application further provides a computer-readable storage medium, having a computer program stored thereon, where the computer program, when executed by a processor, implements the following steps:
obtaining detection signal sets corresponding to electrical zones in a pressurized water reactor, respectively, where the detection signal sets corresponding to the electrical zones each include a detection signal detected by a neutron detector disposed in a respective one of the electrical zones;
determining a target failure mode and a temperature-related value of the pressurized water reactor based on the detection signal sets, where the temperature-related value includes a departure from nucleate boiling ratio (DNBR) and/or a linear power density (LPD); and
performing fault processing on the pressurized water reactor according to the target failure mode and the temperature-related value.

In a fifth aspect, the present application further provides a computer program product, including a computer program, where the computer program, when executed by a processor, implements the following steps:
obtaining detection signal sets corresponding to electrical zones in a pressurized water reactor, respectively, where the detection signal sets corresponding to the electrical zones each include a detection signal detected by a neutron detector disposed in a respective one of the electrical zones;
determining a target failure mode and a temperature-related value of the pressurized water reactor based on the detection signal sets, where the temperature-related value includes a departure from nucleate boiling ratio (DNBR) and/or a linear power density (LPD); and
performing fault processing on the pressurized water reactor according to the target failure mode and the temperature-related value.

In the above fault processing method and apparatus for the nuclear power plant, the computer device, and the storage medium, a failure mode is introduced. The target failure mode and the temperature-related value of the pressurized water reactor are determined by obtaining the detection signal sets corresponding to the electrical zones in the pressurized water reactor; and then the fault processing is performed on the pressurized water reactor according to the target failure mode and the temperature-related value. Compared with the related art in which whether the pressurized water reactor operates safely cannot be accurately determined when a failure occurs in the neutron detectors of the pressurized water reactor, the method provided in the present application can accurately determine whether the pressurized water reactor operates safely by using the target failure mode and the temperature-related value of the pressurized water reactor, thereby improving the safety of operation of the pressurized water reactor.

### BRIEF DESCRIPTION OF THE DRAWINGS

FIG. 1 is a schematic flowchart of a fault processing method for a nuclear power plant in an embodiment.
FIG. 2 is a schematic flowchart of determining a target failure mode in an embodiment.
FIG. 3 is a schematic flowchart of fault processing in an embodiment.
FIG. 4 is a schematic diagram of partitioning electrical zones in an embodiment.
FIG. 5 is a schematic flowchart of a fault processing method for a nuclear power plant in another embodiment.
FIG. 6 is a structural block diagram of a fault processing apparatus for a nuclear power plant in an embodiment.
FIG. 7 is a structural block diagram of a fault processing apparatus for a nuclear power plant in another embodiment.
FIG. 8 is a structural block diagram of a fault processing apparatus for a nuclear power plant in still another embodiment.
FIG. 9 is an internal structure diagram of a computer device in an embodiment.

### DETAILED DESCRIPTION

To make the objectives, technical solutions, and advantages of the present application clearer, the present application is further described in detail below with reference to the accompanying drawings and embodiments. It should be understood that the specific embodiments described herein are merely used to explain the present application, and are not used to limit the present application.

With the development of nuclear power technology, to ensure safe operation of a pressurized water reactor in a nuclear power plant, the operational status of a neutron detector in the pressurized water reactor needs to be monitored. When the neutron detector has failed, the faulty neutron detector is repaired or replaced.

However, since the neutron detector is disposed in the pressurized water reactor, conventional fault processing methods require waiting until the end of the operating cycle of the pressurized water reactor to perform repair or replacement of the neutron detector when the reactor vessel head is opened during refueling, thereby reducing the safety of nuclear power operation.

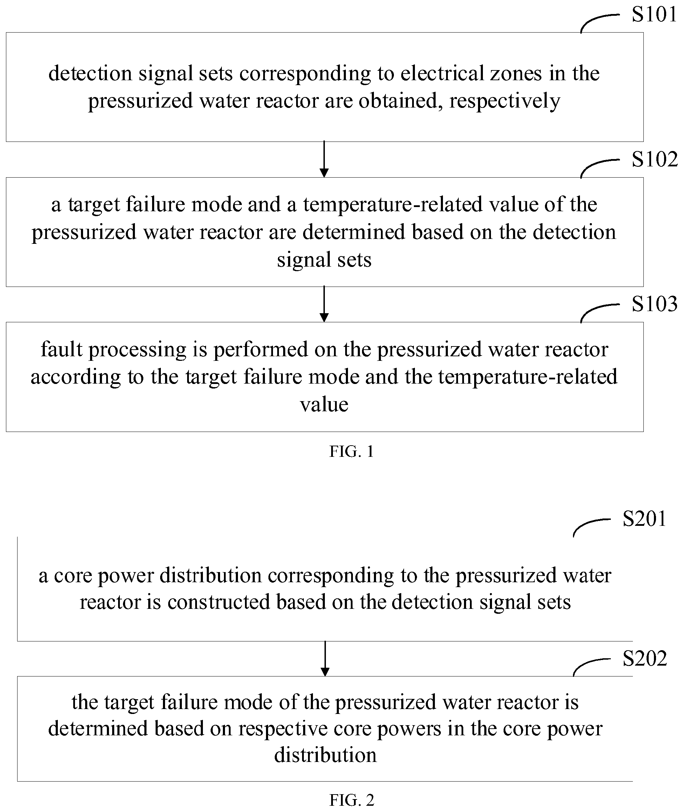

Accordingly, in an embodiment, as shown in FIG. 1, a fault processing method for a nuclear power plant is provided, which specifically includes the following steps.

In the step S101, detection signal sets corresponding to electrical zones in the pressurized water reactor are obtained, respectively.

The electrical zones refer to the partitioning of neutron detectors according to an arrangement of the neutron detectors in the pressurized water reactor. The detection signal sets corresponding to the respective electrical zones each include a detection signal detected by a neutron detector included in a respective one of the electrical zones.

Optionally, the neutron detectors in the pressurized water reactor can be partitioned according to the arrangement of the neutron detectors in the pressurized water reactor and following a rule that the neutron detectors in each electrical zoneare uniformly distributed in the pressurized water reactor, so as to obtain the electrical zones.

Optionally, to ensure safe operation of the pressurized water reactor, a time interval for obtaining detection signals can be preset. When the time for obtaining the detection signals is reached, a detection instruction is sent to the neutron detectors in the respective electrical zones. Subsequently, for each neutron detector, when receiving the detection instruction, the neutron detector detects the operational status of the pressurized water reactor, and then generates and feeds back a detection signal.

Further, for each electrical zone, after the detection signals fed back by all the neutron detectors in the electrical zone are received, a detection signal set corresponding to the electrical zone can be generated.

For example, taking a pressurized water reactor with a 177-core configuration as an example, 42 neutron detectors are arranged in the pressurized water reactor, each neutron detector has 7 probes in an axial direction, and these neutron detectors may be divided into four independent electrical zones. It can be understood that, since the neutron detectors in each electrical zone are uniformly distributed in the pressurized water reactor, each electrical zone can detect the entire pressurized water reactor. Therefore, core powers at positions of the 42 neutron detectors in the pressurized water reactor can be reconstructed by using a detection signal set corresponding to a single electrical zone, thereby ensuring stability and accuracy of power detection in the event of a failure of neutron detectors in a particular electrical zone.

In the step S102, a target failure mode and a temperature-related value of the pressurized water reactor are determined based on the detection signal sets.

The failure mode refers to various operation modes corresponding to various fault statuses of the neutron detectors in the pressurized water reactor. The target failure mode refers to a current failure mode of the pressurized water reactor. The temperature-related value can represent a temperature of the interior of the pressurized water reactor. The temperature-related value includes a departure from nucleate boiling ratio (DNBR) and/or a linear power density (LPD). Further, the DNBR can represent a fuel cladding temperature in the pressurized water reactor, and the LPD can represent a fuel pellet temperature in the pressurized water reactor.

Optionally, after the detection signal sets corresponding to the electrical zones are obtained, the detection signal sets can be input into a temperature determination model. The temperature determination model determines the DNBR and the LPD of the pressurized water reactor based on the detection signal sets and model parameters. Alternatively, the temperature determination model determines either the DNBR or the LPD of the pressurized water reactor based on the detection signal sets and the model parameters.

Further, fault statuses of the neutron detectors in the respective electrical zones can be determined based on signal strengths of the detection signals in the detection signal sets. Subsequently, the fault statuses of the neutron detectors in the respective electrical zones can be compared with fault statuses of the neutron detectors corresponding to preset failure modes, and the target failure mode of the pressurized water reactor is determined based on a comparison result. It can be understood that, in practical applications, there are at most 10 probes that fail simultaneously.

For example, four failure modes can be determined based on common fault statuses of the neutron detectors in the pressurized water reactor. The fault status of the neutron detector corresponding to failure mode 1 is that all neutron detectors in a certain electrical zone have failed. The fault status of the neutron detector corresponding to failure mode 2 is that all probes on a certain neutron detector have failed. The fault status of the neutron detector corresponding to failure mode 3 is that probes on one or more neutron detectors have failed. The fault status of the neutron detector corresponding to failure mode 4 is that all neutron detectors in a certain electrical zone have failed, and probes on one or more neutron detectors have failed.

Correspondingly, in some embodiments, determining a failure mode can include the following steps. In the first step, after fault statuses of the neutron detectors in the respective electrical zones are determined, it can be determined whether only all neutron detectors in a certain electrical zone have failed based on the fault statuses of the neutron detectors. If yes, the target failure mode of the pressurized water reactor is determined as the failure mode 1; if no, the following second step is performed.

In the second step, whether all probes on a certain neutron detector have failed is determined; if yes, the target failure mode of the pressurized water reactor is determined as the failure mode 2; if no, the following third step is performed.

In the third step, whether probes on one or more neutron detectors have failed is determined; if yes, the target failure mode of the pressurized water reactor is determined as the failure mode 3; if no, the following fourth step is performed.

In the fourth step, whether all neutron detectors in a certain electrical zone have failed and whether probes on one or more neutron detectors have failed are determined; if yes, the target failure mode of the pressurized water reactor is determined as the failure mode 4.

In the step S103, fault processing is performed on the pressurized water reactor according to the target failure mode and the temperature-related value.

Optionally, the temperature-related value of the pressurized water reactor can be input into a processing model trained based on the target failure mode. The processing model outputs a fault processing approach for the pressurized water reactor based on the temperature-related value and model parameters.

It can be understood that, in some embodiments, to ensure safe operation of the pressurized water reactor, before the fault processing is performed on the pressurized water reactor according to the target failure mode and the temperature-related value, a number of faulty probes can be determined based on the fault statuses of the neutron detectors. Subsequently, whether the number of faulty probes is greater than a preset quantity threshold is determined. When the number of faulty probes is greater than the preset quantity threshold, a reactor trip is performed on the pressurized water reactor. When the number of faulty probes is not greater than the preset quantity threshold, the fault processing is performed on the pressurized water reactor according to the target failure mode and the temperature-related value.

In the above fault processing method for the nuclear power plant, a failure mode is introduced. The target failure mode and the temperature-related value of the pressurized water reactor are determined by obtaining the detection signal sets corresponding to the electrical zones in the pressurized water reactor. Then, the fault processing is performed on the pressurized water reactor according to the target failure mode and the temperature-related value. Compared with the related art, in which whether the pressurized water reactor operates safely cannot be accurately determined when a failure occurs in the neutron detectors of the pressurized water reactor, the present method can accurately determine whether the pressurized water reactor operates safely by using the target failure mode and the temperature-related value of the pressurized water reactor, thereby improving the safety of operation of the pressurized water reactor.

To ensure the accuracy of determining the target failure mode, based on the above embodiment, in this embodiment, an optional method for determining the target failure mode is provided, as shown in FIG. 2, which specifically includes the following steps.

In the step S201, a core power distribution corresponding to the pressurized water reactor is constructed based on the detection signal sets.

The core power distribution represents a distribution of core powers in the pressurized water reactor.

Optionally, the core power distribution corresponding to the pressurized water reactor can be constructed based on an association between each detection signal in the detection signal sets and a position of a neutron detector. For example, for the same position, the detection signals related to the position in the detection signal sets corresponding to the respective electrical zones can be fused.

It can be understood that, since the neutron detectors in each electrical zone are uniformly distributed, even if all neutron detectors in a certain electrical zone have failed, the core power distribution corresponding to the pressurized water reactor can still be constructed by using other neutron detectors.

In the step S202, the target failure mode of the pressurized water reactor is determined based on respective core powers in the core power distribution.

In an optional implementation, the respective core powers in the core power distribution can be input into a mode determination model. The mode determination model determines the target failure mode of the pressurized water reactor based on the respective core powers and model parameters.

In another optional implementation, a fault status of a neutron detector in the respective one of the electrical zones in the pressurized water reactor can be determined based on the respective core powers in the core power distribution. Subsequently, the target failure mode of the pressurized water reactor is determined based on fault statues of the neutron detectors in the respective electrical zones in the pressurized water reactor.

It can be understood that, when a probe of a neutron detector has failed, a detection signal obtained by the failed probe is 0. Therefore, when the core power distribution corresponding to the pressurized water reactor is constructed, the core power corresponding to the failed probe is reduced. In this case, the fault statues of the neutron detectors in the respective electrical zones in the pressurized water reactor can be determined based on the respective core powers in the core power distribution.

Alternatively, to facilitate observation of the fault status of the neutron detector, when the core power distribution corresponding to the pressurized water reactor is constructed, for a core power at any position, when a detection signal, at the position, in a detection signal set corresponding to a certain electrical zone is 0, a core power at the position is directly set to 0 when the core power distribution is constructed. Further, the fault status of the neutron detector can be determined by determining a position where the core power is 0 in the core power distribution.

Further, after the fault statues of the neutron detectors are determined, the target failure mode of the pressurized water reactor can be determined based on the fault statues of the neutron detectors in the respective electrical zones in the pressurized water reactor and the fault statuses of the neutron detectors corresponding to the failure mode.

In this embodiment, the core power distribution is introduced, and the target failure mode of the pressurized water reactor is determined based on the respective core powers in the core power distribution, so that the accuracy of determining the target failure mode can be ensured.

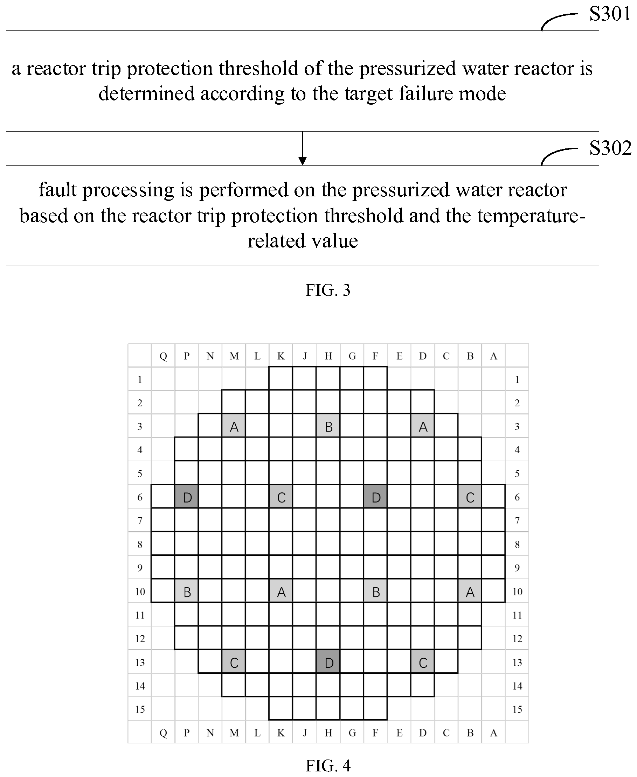

To ensure the accuracy of the fault processing, based on the above embodiment, in this embodiment, an optional method for fault processing is provided, as shown in FIG. 3, which specifically includes the following steps.

In the step S301, a reactor trip protection threshold of the pressurized water reactor is determined according to the target failure mode.

The reactor trip protection threshold refers to a value used to determine whether a reactor trip needs to be performed on the pressurized water reactor. Further, the reactor trip protection threshold includes a DNBR threshold and/or an LPD threshold.

Optionally, a reactor trip protection threshold corresponding to each failure mode can be preset. Subsequently, after the target failure mode of the pressurized water reactor is determined, the reactor trip protection threshold of the pressurized water reactor can be determined according to the target failure mode.

In the step S302, fault processing is performed on the pressurized water reactor based on the reactor trip protection threshold and the temperature-related value.

Optionally, the reactor trip protection threshold can be compared with the temperature-related value, and subsequently, the fault processing is performed on the pressurized water reactor based on a comparison result. For example, when a magnitude relationship between the reactor trip protection threshold and the temperature-related value meets a reactor trip condition, a reactor trip is performed on the pressurized water reactor.

For example, the reactor trip protection threshold corresponding to the failure mode 1 is denoted as DNBR1 and LPD1. The reactor trip protection threshold corresponding to the failure mode 2 is denoted as DNBR2 and LPD2. The reactor trip protection threshold corresponding to the failure mode 3 is denoted as DNBR3 and LPD3. The reactor trip protection threshold corresponding to the failure mode 4 is denoted as DNBR4 and LPD4.

Further, when a pressurized water reactor A is in the failure mode 1, the departure from nucleate boiling ratio ADNBR of the pressurized water reactor A is compared with the DNBR1. When the ADNBR is less than the DNBR1, a reactor trip is performed on the pressurized water reactor A. When the ADNBR is greater than or equal to DNBR1, the linear power density ALPD of the pressurized water reactor A is compared with the LPD1. When the ALPD is greater than the LPD1, a reactor trip is performed on the pressurized water reactor A. When the ALPD is less than or equal to the LPD1, the pressurized water reactor operates normally.

In this embodiment, the reactor trip protection threshold is introduced, and the fault processing is performed on the pressurized water reactor based on the reactor trip protection threshold and the temperature-related value, so that the accuracy of the fault processing of the pressurized water reactor can be ensured.

To ensure the accuracy of partitioning the electrical zones, based on the above embodiment, in some embodiments, a manner of partitioning the electrical zones is provided. Specifically, the neutron detectors in the pressurized water reactor are partitioned according to an arrangement of the neutron detectors in the pressurized water reactor to obtain the electrical zones. The electrical zones are distributed in an interlaced manner, and each of the electrical zones includes at least one neutron detector.

Optionally, since a distribution of the core powers is symmetric, when the neutron detectors are arranged in the pressurized water reactor, a plurality of neutron detectors can be uniformly arranged in the pressurized water reactor while avoiding positions of control rods and considering installation constraints in an actual arrangement scenario.

Further, after the arrangement of the neutron detectors in the pressurized water reactor is determined, when the neutron detectors are partitioned, it needs to be ensured that the detectors in each electrical zone are dispersed in the pressurized water reactor and the electrical zones can be distributed in an interlaced manner, and a vertical central axis of the neutron detectors is parallel to a vertical central axis of cores in the pressurized water reactor, so as to ensure that the respective electrical zones can accurately simulate the core power distribution of the pressurized water reactor.

For example, after 14 neutron detectors are uniformly arranged in the pressurized water reactor, to ensure that the detectors in each electrical zone are dispersed in the pressurized water reactor and the electrical zones can be distributed in an interlaced manner, and the vertical central axis of the neutron detectors is parallel to the vertical central axis of the cores in the pressurized water reactor, the 14 neutron detectors may be divided into group A, group B, group C, and group D with reference to FIG. 4.

In this embodiment, the neutron detectors in the pressurized water reactor are partitioned according to the arrangement of the neutron detectors in the pressurized water reactor, so that the accuracy of partitioning the electrical zones can be ensured, so as to ensure smooth execution of subsequent fault processing.

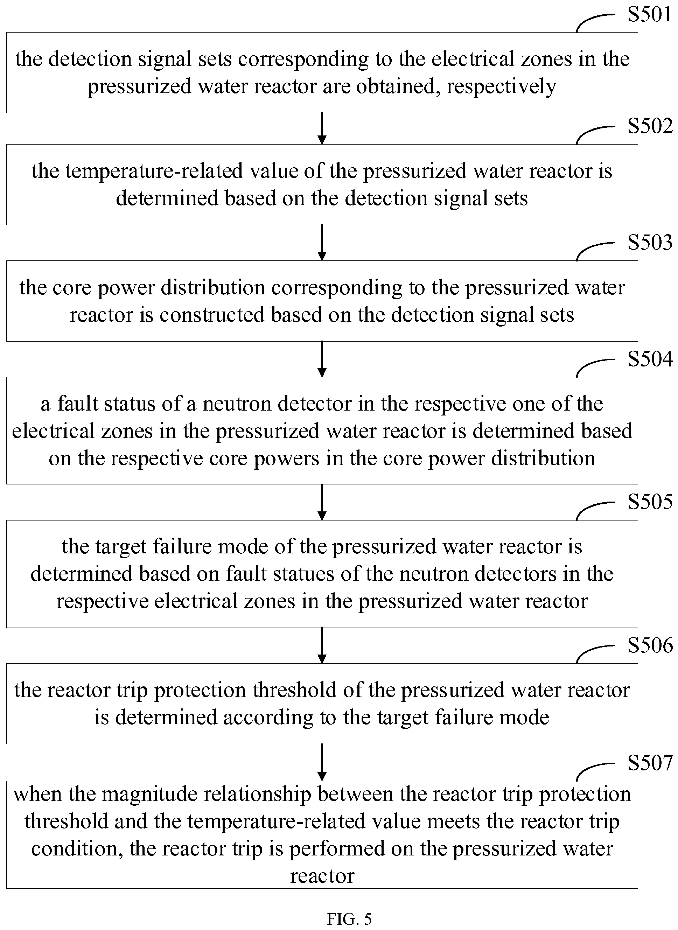

FIG. 5 is a schematic flowchart of a fault processing method for a nuclear power plant in another embodiment. Based on the above embodiment, an optional example of the fault processing method for a nuclear power plant is provided in this embodiment. With reference to FIG. 5, a specific implementation is as follows.

In the step S501, the detection signal sets corresponding to the electrical zones in the pressurized water reactor are obtained, respectively.

The detection signal sets corresponding to the respective electrical zones each include a detection signal detected by a neutron detector included in the electrical zone.

Optionally, the neutron detectors in the pressurized water reactor are partitioned according to the arrangement of the neutron detectors in the pressurized water reactor to obtain the electrical zones. The electrical zones are distributed in an interlaced manner. Each of the electrical zones includes at least one neutron detector.

In the step S502, the temperature-related value of the pressurized water reactor is determined based on the detection signal sets.

The temperature-related value includes the DNBR and/or the LPD.

In the step S503, the core power distribution corresponding to the pressurized water reactor is constructed based on the detection signal sets.

In the step S504, a fault status of the neutron detector in the respective one of the electrical zones in the pressurized water reactor is determined based on the respective core powers in the core power distribution.

In the step S505, the target failure mode of the pressurized water reactor is determined based on fault statues of the neutron detectors in the respective electrical zones in the pressurized water reactor.

In the step S506, the reactor trip protection threshold of the pressurized water reactor is determined according to the target failure mode.

The reactor trip protection threshold includes the DNBR threshold and/or the LPD threshold.

Further, before the reactor trip protection threshold of the pressurized water reactor is determined according to the target failure mode, a number of faulty probes can further be determined based on the fault statuses of the neutron detectors. When the number of faulty probes is greater than a quantity threshold, the reactor trip is performed on the pressurized water reactor.

In the step S507, when the magnitude relationship between the reactor trip protection threshold and the temperature-related value meets the reactor trip condition, the reactor trip is performed on the pressurized water reactor.

For specific procedures of the above step S501 to step S507, reference can be made to the descriptions of the above method embodiments, of which the implementation principles and technical effects are similar, and details are not described here again.

It should be understood that, although the steps in the flowcharts involved in the above embodiments are sequentially displayed as indicated by arrows, these steps are not necessarily performed sequentially in the order indicated by the arrows. Unless explicitly stated herein, there is no strict order limitation on the execution of these steps, and these steps may be performed in other orders. Moreover, at least a part of the steps in the flowcharts involved in the above embodiments may include a plurality of steps or a plurality of stages. These steps or stages are not necessarily performed and completed at the same moment, but may be performed at different moments. An order of performing these steps or stages is not necessarily sequential, but may be performed in turn or alternately with at least a part of other steps or at least a part of steps or stages in the other steps.

Based on the same inventive concept, an embodiment of the present application further provides a fault processing apparatus for a nuclear power plant to implement the above fault processing method for the nuclear power plant. An implementation provided by the apparatus for solving the problem is similar to the implementation described in the above method. Therefore, for specific limitations in one or more embodiments of the fault processing apparatus provided below, reference can be made to the definitions on the fault processing method for the nuclear power plant described above, and details are not described here again.

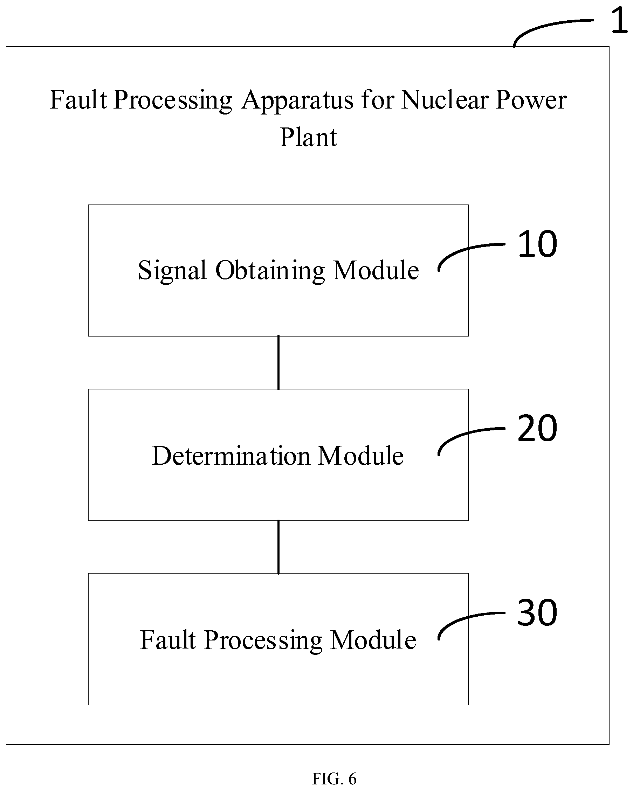

In an embodiment, as shown in FIG. 6, a fault processing apparatus 1 for a nuclear power plant is provided, including a signal obtaining module 10, a determination module 20, and a fault processing module 30.

The signal obtaining module 10 is configured to obtain detection signal sets corresponding to electrical zones in a pressurized water reactor, respectively, where the detection signal sets corresponding to the respective electrical zones each include a detection signal detected by a neutron detector included in the electrical zone.

The determination module 20 is configured to determine a target failure mode and a temperature-related value of the pressurized water reactor based on the detection signal sets, where the temperature-related value includes a DNBR and/or an LPD.

The fault processing module 30 is configured to perform fault processing on the pressurized water reactor according to the target failure mode and the temperature-related value.

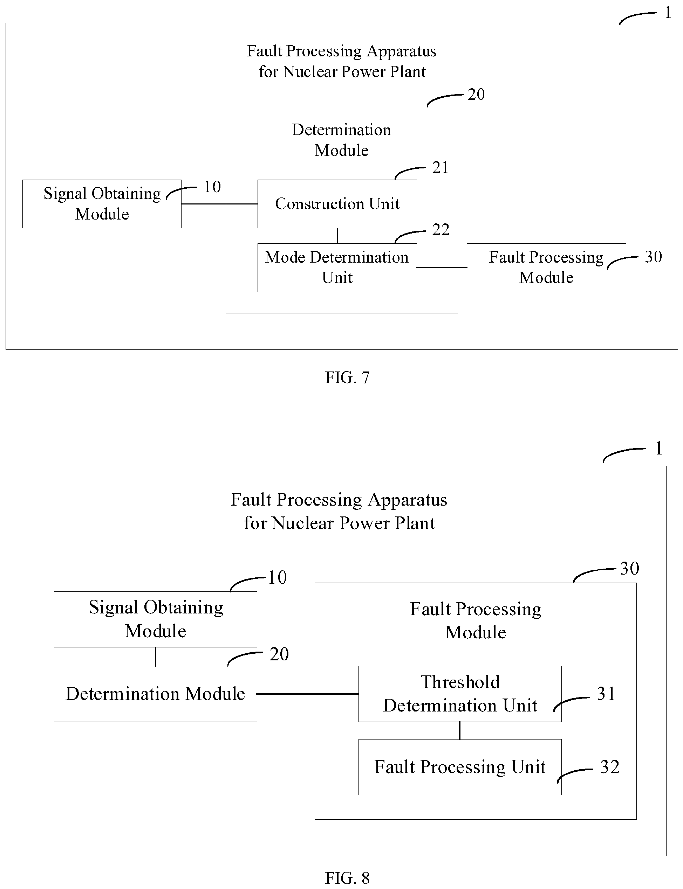

In an embodiment, as shown in FIG. 7, the determination module 20 includes: a construction unit 21configured to construct a core power distribution corresponding to the pressurized water reactor based on the detection signal sets; and a mode determination unit 22 configured to determine the target failure mode of the pressurized water reactor based on respective core powers in the core power distribution.

In an embodiment, the mode determination unit 22 is specifically configured to determine a fault status of the neutron detector in the respective one of the electrical zones in the pressurized water reactor based on the respective core powers in the core power distribution, and determine the target failure mode of the pressurized water reactor based on fault statues of neutron detectors in the respective electrical zones in the pressurized water reactor.

In an embodiment, the fault processing module 30 is specifically configured to determine a number of faulty probes based on the fault statuses of the neutron detectors, and perform a reactor trip on the pressurized water reactor when the number of faulty probes is greater than a quantity threshold.

In an embodiment, as shown in FIG. 8, the fault processing module 30 includes: a threshold determination unit 31 configured to determine a reactor trip protection threshold of the pressurized water reactor according to the target failure mode, where the reactor trip protection threshold includes a DNBR threshold and/or an LPD threshold; a fault processing unit 32 configured to perform the fault processing on the pressurized water reactor based on the reactor trip protection threshold and the temperature-related value.

In an embodiment, the fault processing unit 32 is specifically configured to perform a reactor trip on the pressurized water reactor when a magnitude relationship between the reactor trip protection threshold and the temperature-related value meets a reactor trip condition.

In an embodiment, the fault processing apparatus 1 further includes a partition module. The partition module is specifically configured to partition neutron detectors in the pressurized water reactor according to an arrangement of the neutron detectors in the pressurized water reactor to obtain the electrical zones. The electrical zones are distributed in an interlaced manner, and each of the electrical zones includes at least one neutron detector.

All or part of the modules in the above fault processing apparatus for the nuclear power plant can be implemented by software, hardware, and a combination thereof. The above modules can be embedded in or independent of a processor in a computer device in hardware, or can be stored in a memory in the computer device in software, so that the processor invokes and performs operations corresponding to the above modules.

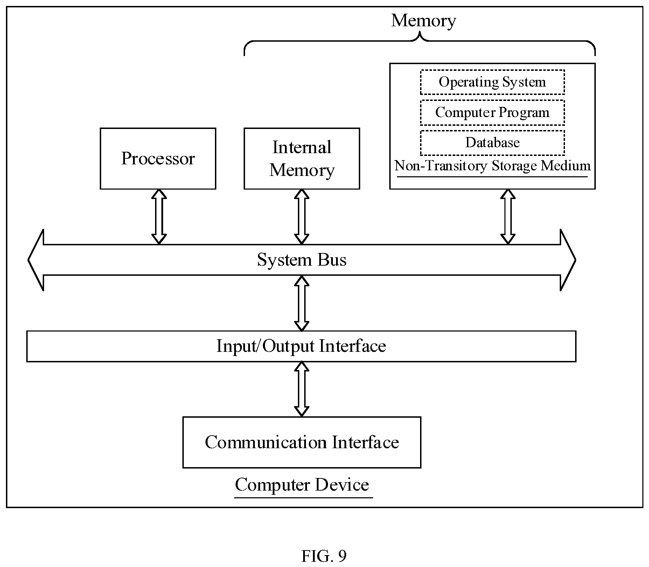

In an embodiment, a computer device is provided. The computer device may be a server, and an internal structure diagram thereof can be shown in FIG. 9. The computer device includes a processor, a memory, an input/output (I/O) interface, and a communication interface. The processor, the memory, and the input/output interface are connected by a system bus. The communication interface is connected to the system bus through the input/output interface. The processor of the computer device is configured to provide computing and control capabilities. The memory of the computer device includes a non-transitory storage medium and an internal memory. The non-transitory storage medium stores an operating system, a computer program, and a database. The internal memory provides an environment for the operationof the operating system and the computer program in the non-transitory storage medium. The database of the computer device is configured to store reactor trip protection threshold data corresponding to respective failure modes. The input/output interface of the computer device is configured to exchange information between the processor and an external device. The communication interface of the computer device is configured to communicate with an external terminal through a network connection. The computer program, when executed by the processor, implements the fault processing method for the nuclear power plant.

It can be understood by those skilled in the art that the structure shown in FIG. 9 is merely a block diagram of a part of the structure related to the solution of the present application, and does not constitute a limitation on the computer device to which the solution of the present application is applied. A specific computer device may include more or fewer components than those shown in the drawings, combine some components, or have a different component arrangement.

In an embodiment, a computer device is provided, including a memory and a processor. The memory stores a computer program. The processor, when executing the computer program, implements the following steps:
obtaining detection signal sets corresponding to electrical zones in a pressurized water reactor, respectively, where the detection signal sets corresponding to the electrical zones each include a detection signal detected by a neutron detector included in a respective one of the electrical zones;
determining a target failure mode and a temperature-related value of the pressurized water reactor based on the detection signal sets, where the temperature-related value includes a DNBR and/or a LPD; and
performing fault processing on the pressurized water reactor according to the target failure mode and the temperature-related value.

In an embodiment, when executing logic in the computer program for determining the target failure mode of the pressurized water reactor based on the detection signal sets, the processor specifically implements the following steps:
constructing a core power distribution corresponding to the pressurized water reactor based on the detection signal sets; and determining the target failure mode of the pressurized water reactor based on the respective core powers in the core power distribution.

In an embodiment, when executing logic in the computer program for determining the target failure mode of the pressurized water reactor based on the respective core powers in the core power distribution, the processor specifically implements the following steps:
determining a fault status of the neutron detector in the respective one of the electrical zones in the pressurized water reactor based on the respective core powers in the core power distribution; and determining the target failure mode of the pressurized water reactor based on fault statues of neutron detectors in the respective electrical zones in the pressurized water reactor.

In an embodiment, before performing the fault processing on the pressurized water reactor according to the target failure mode and the temperature-related value, when executing the logic in the computer program, the processor specifically implements the following steps:
determining a number of faulty probes based on the fault statuses of the neutron detectors; and performing a reactor trip on the pressurized water reactor when the number of faulty probes is greater than a quantity threshold.

In an embodiment, when executing logic in the computer program for performing the fault processing on the pressurized water reactor according to the target failure mode and the temperature-related value, the processor specifically implements the following steps:
determining a reactor trip protection threshold of the pressurized water reactor according to the target failure mode, where the reactor trip protection threshold includes a DNBR threshold and/or a LPD threshold; and performing the fault processing on the pressurized water reactor based on the reactor trip protection threshold and the temperature-related value.

In an embodiment, when executing logic in the computer program for performing the fault processing on the pressurized water reactor according to the reactor trip protection threshold and the current measured value of the pressurized water reactor, the processor specifically implements the following step:
performing a reactor trip on the pressurized water reactor when a magnitude relationship between the reactor trip protection threshold and the temperature-related value meets a reactor trip condition.

In an embodiment, when executing logic in the computer program, the processor specifically implements the following step:
partitioning the neutron detectors in the pressurized water reactor according to an arrangement of the neutron detectors in the pressurized water reactor to obtain the electrical zones, where the electrical zones are distributed in an interlaced manner, and each of the electrical zones includes at least one neutron detector.

In an embodiment, a computer-readable storage medium is provided, having a computer program stored thereon. The computer program, when executed by a processor, implements the following steps:
obtaining detection signal sets corresponding to electrical zones in a pressurized water reactor, respectively, where the detection signal sets corresponding to the electrical zones each include a detection signal detected by a neutron detector included in a respective one of the electrical zones;
determining a target failure mode and a temperature-related value of the pressurized water reactor based on the detection signal sets, where the temperature-related value includes a DNBR and/or a LPD; and
performing fault processing on the pressurized water reactor according to the target failure mode and the temperature-related value.

In an embodiment, when logic of codes in the computer program for determining the target failure mode of the pressurized water reactor based on the detection signal sets is executed by the processor, the following steps are specifically implemented:
constructing a core power distribution corresponding to the pressurized water reactor based on the detection signal sets; and determining the target failure mode of the pressurized water reactor based on respective core powers in the core power distribution.

In an embodiment, when logic of codes in the computer program for determining the target failure mode of the pressurized water reactor based on the respective core powers in the core power distribution is executed by the processor, the following steps are specifically implemented:
determining a fault status of the neutron detector in the respective one of the electrical zones in the pressurized water reactor based on the respective core powers in the core power distribution; and determining the target failure mode of the pressurized water reactor based on the fault statues of neutron detectors in the respective electrical zones in the pressurized water reactor.

In an embodiment, before performing the fault processing on the pressurized water reactor according to the target failure mode and the temperature-related value, when logic of codes in the computer program is executed by the processor, the following steps are specifically implemented:
determining a number of faulty probes based on the fault statuses of the neutron detectors; and performing a reactor trip on the pressurized water reactor when the number of faulty probes is greater than a quantity threshold.

In an embodiment, when logic of codes in the computer program for performing the fault processing on the pressurized water reactor according to the target failure mode and the temperature-related value is executed by the processor, the following steps are specifically implemented:
determining a reactor trip protection threshold of the pressurized water reactor according to the target failure mode, where the reactor trip protection threshold includes a DNBR threshold and/or an LPD threshold; and performing the fault processing on the pressurized water reactor based on the reactor trip protection threshold and the temperature-related value.

In an embodiment, when logic of codes in the computer program for performing the fault processing on the pressurized water reactor according to the reactor trip protection threshold and the current measured value of the pressurized water reactor is executed by the processor, the following step is specifically implemented:
performing a reactor trip on the pressurized water reactor when a magnitude relationship between the reactor trip protection threshold and the temperature-related value meets a reactor trip condition.

In an embodiment, when logic of codes in the computer program is executed by the processor, the following step is specifically implemented:
partitioning neutron detectors in the pressurized water reactor according to an arrangement of the neutron detectors in the pressurized water reactor to obtain the electrical zones, where the electrical zones are distributed in an interlaced manner, and each of the electrical zones includes at least one neutron detector.

In an embodiment, a computer program product is provided, including a computer program. The computer program, when executed by a processor, implements the following steps:
obtaining detection signal sets corresponding to electrical zones in a pressurized water reactor, respectively, where the detection signal sets corresponding to the electrical zones each include a detection signal detected by a neutron detector included in a respective one of the electrical zones;
determining a target failure mode and a temperature-related value of the pressurized water reactor based on the detection signal sets, where the temperature-related value includes a DNBR and/or a LPD; and
performing fault processing on the pressurized water reactor according to the target failure mode and the temperature-related value.

In an embodiment, when the computer program is executed by the processor to perform an operation of determining the target failure mode of the pressurized water reactor based on the detection signal sets, the following steps are specifically implemented:
constructing a core power distribution corresponding to the pressurized water reactor based on the detection signal sets; and determining the target failure mode of the pressurized water reactor based on respective core powers in the core power distribution.

In an embodiment, when the computer program is executed by the processor to perform an operation of determining the target failure mode of the pressurized water reactor based on the respective core powers in the core power distribution, the following steps are specifically implemented:
determining a fault status of the neutron detector in the respective one of the electrical zones in the pressurized water reactor based on the respective core powers in the core power distribution; and determining the target failure mode of the pressurized water reactor based on fault statues of neutron detectors in the respective electrical zones in the pressurized water reactor.

In an embodiment, before performing the fault processing on the pressurized water reactor according to the target failure mode and the temperature-related value, when the computer program is executed by the processor, the following steps are specifically implemented:
determining a number of faulty probes based on the fault statuses of the neutron detectors; and performing a reactor trip on the pressurized water reactor when the number of faulty probes is greater than a quantity threshold.

In an embodiment, when the computer program is executed by the processor to perform an operation of performing the fault processing on the pressurized water reactor according to the target failure mode and the temperature-related value, the following steps are specifically implemented:
determining a reactor trip protection threshold of the pressurized water reactor according to the target failure mode, where the reactor trip protection threshold includes a DNBR threshold and/or an LPD threshold; and performing the fault processing on the pressurized water reactor based on the reactor trip protection threshold and the temperature-related value.

In an embodiment, when the computer program is executed by the processor to perform an operation of performing the fault processing on the pressurized water reactor according to the reactor trip protection threshold and the current measured value of the pressurized water reactor, the following step is specifically implemented:
performing a reactor trip on the pressurized water reactor when a magnitude relationship between the reactor trip protection threshold and the temperature-related value meets a reactor trip condition.

In an embodiment, when the computer program is executed by the processor, the following step is specifically implemented:
partitioning neutron detectors in the pressurized water reactor according to an arrangement of the neutron detectors in the pressurized water reactor to obtain the electrical zones, where the electrical zones are distributed in an interlaced manner, and each of the electrical zones includes at least one neutron detector.

It should be noted that the data involved in the present application (including but not limited to the reactor trip protection thresholds corresponding to the respective failure modes) is authorized by users or fully authorized by all parties. The collection, use, and processing of the relevant data need to comply with relevant regulations.

Those of ordinary skill in the art can understand that all or part of the processes in the methods of the above embodiments can be implemented by instructing relevant hardware through a computer program. The computer program can be stored in a non-volatile computer-readable storage medium, and when executed, the computer program can include the processes of the embodiments of the above methods. Any reference to a memory, a database, or another medium used in the embodiments provided in the present application can include at least one of a non-volatile memory and a volatile memory. The non-volatile memory can include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory can include a random access memory (RAM), an external cache memory, and the like. By way of illustration and not limitation, the RAM can be in a plurality of forms, such as a static random access memory (SRAM) or a dynamic random access memory (DRAM). The database involved in the embodiments provided in the present application can include at least one of a relational database and a non-relational database. The non-relational database can include a blockchain-based distributed database, and the like, but is not limited thereto. The processor involved in the embodiments provided in the present application can be a general-purpose processor, a central processing unit, a graphics processing unit, a digital signal processor, a programmable logic device, a quantum-computing-based data processing logic device, and the like, but is not limited thereto.

The technical features of the above embodiments can be combined arbitrarily. For concise description, not all possible combinations of the technical features in the above embodiments are described. However, as long as there is no contradiction in a combination of these technical features, the combination should be considered as falling within the scope of this specification.

The above embodiments merely describe some implementations of the present application, and their description is specific and detailed, but should not be understood as a limitation on the protection scope of the present application. It should be noted that, for those of ordinary skill in the art, several variations and improvements can be made without departing from the conception of the present application, and these all fall within the protection scope of the present application. Therefore, the protection scope of the present application shall be subject to the appended claims.

## Claims

1. A fault processing method for a nuclear power plant, **characterized by** comprising:
obtaining detection signal sets corresponding to electrical zones in a pressurized water reactor, respectively, wherein the detection signal sets corresponding to the electrical zones each comprise a detection signal detected by a neutron detector disposed in a respective one of the electrical zones;
determining a target failure mode and a temperature-related value of the pressurized water reactor based on the detection signal sets, wherein the temperature-related value comprises a departure from nucleate boiling ratio (DNBR) and/or a linear power density (LPD); and
performing fault processing on the pressurized water reactor according to the target failure mode and the temperature-related value.

2. The method according to claim 1, **characterized in that** determining the target failure mode of the pressurized water reactor based on the detection signal sets comprises:
constructing a core power distribution corresponding to the pressurized water reactor based on the detection signal sets; and
determining the target failure mode of the pressurized water reactor based on respective core powers in the core power distribution.

3. The method according to claim 2, **characterized in that** determining the target failure mode of the pressurized water reactor based on the respective core powers in the core power distribution comprises:
determining a fault status of the neutron detector disposed in the respective one of the electrical zones in the pressurized water reactor based on each of the core powers in the core power distribution; and
determining the target failure mode of the pressurized water reactor based on fault statuses of neutron detectors in the respective electrical zones in the pressurized water reactor.

4. The method according to claim 3, **characterized in that**, before performing the fault processing on the pressurized water reactor according to the target failure mode and the temperature-related value, the method further comprises:
determining a number of faulty probes based on the fault statuses of the neutron detectors in the respective electrical zones in the pressurized water reactor; and
performing a reactor trip on the pressurized water reactor when the number of faulty probes is greater than a quantity threshold.

5. The method according to claim 1, **characterized in that** performing the fault processing on the pressurized water reactor according to the target failure mode and the temperature-related value comprises:
determining a reactor trip protection threshold of the pressurized water reactor according to the target failure mode, wherein the reactor trip protection threshold comprises a DNBR threshold and/or an LPD threshold; and
performing the fault processing on the pressurized water reactor based on the reactor trip protection threshold and the temperature-related value.

6. The method according to claim 5, **characterized in that** performing the fault processing on the pressurized water reactor based on the reactor trip protection threshold and the current measured value of the pressurized water reactor comprises:
performing a reactor trip on the pressurized water reactor when a magnitude relationship between the reactor trip protection threshold and the temperature-related value meets a reactor trip condition.

7. The method according to claim 1, **characterized by** further comprising:
partitioning neutron detectors in the pressurized water reactor according to an arrangement of the neutron detectors in the pressurized water reactor to obtain the electrical zones, wherein the electrical zones are distributed in an interlaced manner, and each of the electrical zones comprises at least one neutron detector.

8. A fault processing apparatus, **characterized by** comprising:
a signal obtaining module, configured to obtain detection signal sets corresponding to electrical zones in a pressurized water reactor, respectively, wherein the detection signal sets corresponding to the electrical zones each comprise a detection signal detected by a neutron detector disposed in a respective one of the electrical zones;
a determination module, configured to determine a target failure mode and a temperature-related value of the pressurized water reactor based on the detection signal sets, wherein the temperature-related value comprises a departure from nucleate boiling ratio (DNBR) and/or a linear power density (LPD); and
a fault processing module, configured to perform fault processing on the pressurized water reactor according to the target failure mode and the temperature-related value.

9. A computer device, comprising a memory and a processor, the memory storing a computer program, **characterized in that** the processor, when executing the computer program, implements the steps of the method according to any one of claims 1 to 7.

10. A computer-readable storage medium having a computer program stored thereon, **characterized in that** the computer program, when executed by a processor, implements the steps of the method according to any one of claims 1 to 7.

11. A computer program product, comprising a computer program, **characterized in that** the computer program, when executed by a processor, implements the steps of the method according to any one of claims 1 to 7.
